Europäisches Patentamt

European Patent Office

Office européen des brevets

(11) Numéro de publication: **0 251 922**
**A1**

## (12) DEMANDE DE BREVET EUROPEEN

(21) Numéro de dépôt: **87401500.1**

(22) Date de dépôt: **30.06.87**

(51) Int. Cl.⁴: **B 60 C 7/12**
B 60 C 7/24

(30) Priorité: **04.07.86 FR 8609746**

(43) Date de publication de la demande:
**07.01.88 Bulletin 88/01**

(84) Etats contractants désignés:
**BE DE ES GB IT NL**

(71) Demandeur: **SOMECA**
**B.P. 41**
**F-11001 Carcassonne (FR)**

(72) Inventeur: **Pinvidic, Jacques**
**La Riante Quartier Patheron**
**F-13090 Aix en Provence (FR)**

(74) Mandataire: **Orès, Bernard et al**
**Cabinet ORES 6, Avenue de Messine**
**F-75008 Paris (FR)**

(54) **Perfectionnements apportés aux roues de brouettes et analogues.**

(57) Roue du type à bandage en caoutchouc.
Une telle roue comprend en combinaison un bandage de roue en caoutchouc (1), de structure allégée, sensiblement en arche de pont, comportant une bande de roulement (26) épaisse et des flancs (27) de hauteur réduite, formant un bandage "taille basse" et délimitant un évidement intérieur (29) de section constante, lesquels flancs (27) comportent à leur extrémité, des talons (2, 3), et des moyens de maintien des talons du bandage dans leur position normalement espacée l'un de l'autre en conformité avec la forme du bandage.
Application : Roues de brouettes notamment.

FIG.1

## Description

"PERFECTIONNEMENTS APPORTES AUX ROUES DE BROUETTES ET ANALOGUES".

La présente invention est relative à des roues de brouettes et analogues et notamment à des roues de brouettes ou analogues comportant un bandage de roues en catouchouc à bandes de roulement épaisses et à flancs de hauteur réduite délimitant un évidement inférieur de section constante, lesquels flancs comportent à leur extrémité des talons maintenus dans leur position normalement espacés l'un de l'autre en conformité avec la forme du bandage par des moyens de maintien.

Les bandages de caoutchouc dont sont actuellement équipées les roues de brouettes sont de différents types. Un premier type est constitué par un bandage en caoutchouc plein monté sur jante métallique ou plastique ; un tel bandage pèse environ 6 kg, pour un diamètre extérieur de 390-400 mm et une largeur de 85 mm. Ce poids élevé a incité les fabricants de bandages de roues de brouettes à proposer des bandages allégés par la disposition d'évidements. Certains de ces bandages (FR-A-2 540 783) comportent des évidements disposés transversalement dans l'épaisseur du bandage, sous forme de trous borgnes espacés régulièrement sur la totalité de la périphérie du bandage. Cependant, le poids de tels bandages est encore élevé.

d'autres bandages (FR-A-2 562 842) comprennent une enveloppe extérieure creuse à deux nervures de fixation qui viennent s'insérer dans des logements correspondants formés dans la jante par les deux rebords proéminents de cette dernière et par des nervures adjacentes de moindre hauteur. Cependant, dans un tel mode de réalisation les flancs, s'il y en a, ne jouent aucune rôle fonctionnel de support des charges, la bande de roulement étant nécessairement mince et souple pour assurer la déformation requise pour assurer la TRANSMISSION DES CHARGES. Cependant, dans une telle conception du bandage, il n'existe aucun élément qui constitue un moyen (tel que flanc par exemple) de limiter la déformation de la bande de roulement en cas de surcharge, en sorte que celle-ci vient s'écraser, dans ce dernier cas, contre la jante, et annihilant ainsi le confort de roulement que l'on attend d'un bandage de roue en caoutchouc.

Dans encore une autre réalisation ancienne, et prévue pour une autre application, à savoir des véhicules d'artillerie, (FR-A- 853 983) on a proposé des roues du type à bandage en caoutchouc comprenant une bande de roulement épaisse et à flancs de hauteur réduite, munis à leur extrémité de talons maintenus dans leur position normalement espacés l'un de l'autre. La forme interne concave du bandage, massif, à supposer qu'elle soit d'application possible pour des véhicules d'artillerie, est totalement inappropriée, entr'autre en raison de son poids, pour des roues de brouettes et analogues. Complémentairement, les jantes prévues pour être équipées de tels bandages comprennent des crochets s'encastrant dans la masse du bandage, ce qui constitue un autre obstacle à l'emploi de tels dispositifs sur des engins comme des brouettes.

Le problème existe donc de fournir des roues de brouettes et analogues, notamment de telles roues comportant un bandage en caoutchouc délimitant un espace intérieur contenant de l'air, qui répondent mieux aux nécessités de la pratique que les roues de brouettes à bandages de caoutchouc proposées dans l'Art antérieur.

Le problème est résolu, selon l'invention, par le fait que dans une roue du type défini ci-dessus, on prévoit de réaliser le bandage en caoutchouc en tant que structure allégée, sensiblement en "arche de pont" formant un bandage "taille basse".

Une telle structure permet alors de réduire le poids d'environ moitié par rapport aux bandages proposés dans l'Art antérieur, en raison, notamment, de la réduction de la hauteur des flancs du bandage, ce qui permet en outre de résoudre le problème posé par le maintien en place des talons du bandage sans avoir à les serrer l'un contre l'autre comme c'est le cas dans l'Art antérieur.

Selon un mode de réalisation avantageux les moyens de maintien des talons du bandage en position normalement espacée l'un de l'autre sont constitués par une pièce en élastomère formant une entretoise d'espacement dont les extrémités opposées prennent appui contre les talons du bandage pour jouer à la fois le rôle d'élément de fermeture de l'évidement intérieur dans la zone des talons du bandage et d'élément de maintien desdits talons, en position normalement espacée l'un de l'autre.

Dans une réalisation préférée, l'entretoise en élastomère prend appui contre la face latérale interne correspondante du talon et ses extrémités opposées sont reçues dans un décrochement prévu à cet effet dans le talon correspondant.

Selon une autre disposition avantageuse de ce mode de réalisation, la pièce en élastomère forme un support sur lequel s'appliquent les faces terminales des talons du bandage.

Selon une modalité avantageuse de cette disposition, la pièce de support en élastomère comporte un rebord extérieur sur toute sa périphérie, ainsi qu'une partie évidée au voisinage dudit rebord, la largeur de l'évidement correspondant sensiblement exactement à l'épaisseur du talon correspondant du bandage, lequel évidement est destiné à constituer un logement propre à recevoir l'extrémité du talon correspondant du bandage.

Selon une disposition avantageuse de ce mode de réalisation, la pièce en élastomère est rendue solidaire des talons par collage.

Selon un autre mode de réalisation avantageux les moyens de maintien des talons du bandage en position normalement espacée l'un de l'autre, sont constitués par une jante présentant un rebord extérieur et deux nervures prévues à une distance du rebord qui correspond sensiblement à l'épaisseur du talon, et qui forment avec ledit rebord des logements propres à recevoir les talons du bandage.

De préférence, la jante présente également entre les logements une zone horizontale située au même niveau que le fond des logements et avantageusement au sommet des nervures.

Selon une autre disposition avantageuse de ce mode de réalisation, lesdits logements sont situés au-dessous du plan horizontal théorique de la jante défini par une ligne qui joint les extrémites supérieures des deux nervures susdites.

Selon encore une autre disposition avantageuse de ce mode de réalisation, la partie de la jante délimitée par les extrémités supérieures des deux nervures susdites, comprend deux pentes de sens opposés dont le sommet commun est décalé par rapport à l'axe commun de la jante et du bandage.

Selon une modalité avantageuse de cette disposition, la longueur de l'une des deux pentes est inférieure à l'épaisseur du talon et, par suite, à la largeur du logement délimité par le rebord de la jante et la nervure adjacente.

Selon un mode de réalisation avantageux du bandage en caoutchouc conforme à l'invention, celui-ci comprend des épaulements extérieurs sensiblement dans le prolongement de la bande de roulement du bandage.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

- les figures 1 à 4 représentent de façon schématique en coupe verticale, différentes modalités de réalisa tion des moyens de maintien en position normalement espacée des talons du bandage, constitués par une pièce en élastomère, et

- la figure 5 représente également en coupe verticale un mode de réalisation des moyens de maintien en position normalement espacée des talons du bandage, formés par la structure particulière de la jante.

Il doit être bien entendu, toutefois, que ces dessins et les parties descriptives correspondantes, sont donnés uniquement à titre d'illustration de l'objet de l'invention, dont ils ne constituent en aucune manière une limitation.

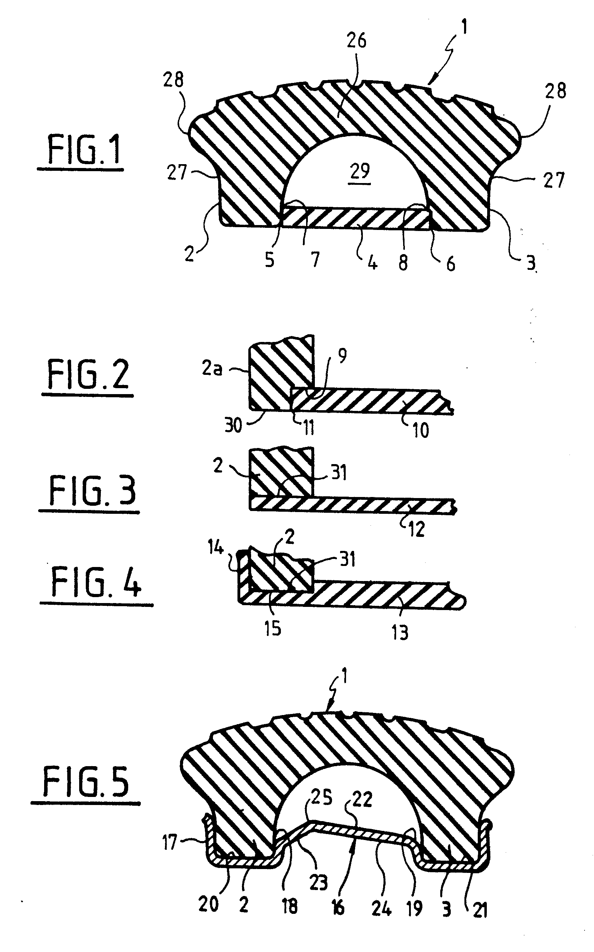

Le bandage en caoutchouc 1, selon l'invention, en forme d'arche représenté à la figure 1 comporte deux talons 2, 3 qui sont maintenus dans la position normale qui est la leur en fonction de la forme du bandage, c'est-à-dire sans devoir être serrés l'un contre l'autre, par une pièce d'entretoise 4 en élastomère dont les extrémités opposées 5 et 6 s'appliquent contre les faces latérales internes 7 et 8 des talons 2, 3 correspondants, sur lesquelles elles peuvent avantageusement être fixées par collage ou analogue, et qui delimite avec la périphérie interne du bandage un évidement intérieur 29 de section constante à l'intérieur duquel est bloqué de l'air.

Selon la variante de la figure 2, les talons 2a sont pourvus à leur extrémité, du côté intérieur, d'un décrochement 9, dans lequel vient s'insérer l'extrémité correspondante 11 de la pièce d'entretoise 10.

Selon la variante de la figure 3, la pièce en élastomère 12 supporte les extrémités 31 des talons 2 du bandage, qui sont fixées sur la face correspondante de ladite pièce 12 par tous moyens appropriés, et notamment par collage.

Dans la variante représentée à la figure 4, la pièce en élastomère 13 comporte un rebord extérieur 14 au voisinage duquel est ménagé un évidement 15 dont la largeur est sensiblement égale à l'épaisseur du talon, et qui constitue un logement propre à recevoir l'extrémité 31 du talon 2.

Le bandage 1 représenté à la figure 5 est monté sur une jante 16 en métal ou en matière plastique, par exemple, qui présente un profil approprié.

Dans le mode de réalisation représenté à la figure 5, la jante 16 comporte un rebord extérieur 17 qui délimite avec une nervure 18,19 prévue à un emplacement convenable, un logement 20,21 propre à recevoir sans jeu le talon 2,3 du bandage 1. De plus, la partie 22 de la jante située entre les logements 20,21 comporte deux pentes 23,24 de sens opposés qui se rejoignent au sommet 25. La longueur de la pente 23 est inférieure à la largeur des logements 20,21 et donc inférieure à l'épaisseur du talon 2,3, de manière à faciliter la mise en place du talon 3 dans son logement 21, après la mise en place du talon 2 dans le logement 20.

Selon une variante simplifée de la jante, celle-ci pourrait présenter entre les logements 20 et 21, une zone horizontale située soit au niveau du fond des logements, soit au niveau des sommets des nervures 18, 19.

Le bandage 1 comporte une bande de roulement 26 épaisse et des flancs 27 de hauteur réduite par rapport aux flancs des bandages en caoutchouc présentés dans l'Art antérieur, cette hauteur réduite permettant d'alléger considérablement le poids du bandage. Cette réduction de hauteur a également pour avantage de faciliter le maintien en place des talons sans devoir les serrer l'un contre l'autre comme c'est le cas dans l'Art antérieur. En outre, grâce à la réduction de la hauteur des flancs 27 du bandage 1, on évite le recours pour la fabrication de celui-ci, à un noyau d'alvéolage qui est générateur de complications.

Il est, de plus, avantageux de pourvoir le bandage 1, d'épaulements extérieurs 28 sensiblement dans le prolongement latéral de la bande de roulement 26. Ces épaulements jouent un rôle d'appuis latéraux et limitent, de ce fait, la flexion - ou déformation - de la partie centrale élastique de la bande de roulement 26, notamment en cas de surcharge.

Ainsi que cela ressort de ce qui précède, l'invention ne se limite nullement à ceux de ses modes de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

## Revendications

1. Roue du type à bandage en caoutchouc comprenant un bandage de roue en caoutchouc (1) à bande de roulement (26) épaisse et à flancs (27) de hauteur réduite délimitant un évidement intérieur (29) de section constante, lesquels flancs (27) comportent à leur extrémité des talons (2,3) maintenus dans leur position normalement espacée l'un de l'autre en conformité avec la forme du bandage par des moyens de maintien, caractérisée en ce que le bandage, de structure allégée, est sensiblement en arche de pont formant un bandage "taille basse."

2. Roue selon la revendication 1, caractérisée en ce que les moyens de maintien des talons du bandage en position normalement espacée l'un de l'autre, sont constitués par une pièce en élastomère formant une entretoise (4) d'espacement dont les extrémités opposées (5,6) prennent appui contre les talons (2, 3) du bandage (1) pour jouer à la fois le rôle d'élément de fermeture de l'évidement intérieur (29) susdit dans la zone des talons (2,3) du bandage (1) et d'élément de maintien desdits talons (2,3), en position normalement espacée l'un de l'autre.

3. Roue selon la revendication 2, caractérisée en ce que les extrémités opposées (11) de ladite entretoise (10) en élastomère prennent appui contre la face latérale interne correspondante (7,8) des talons et sont reçues dans un décrochement (9) prévu à cet effet dans le talon correspondant.

4. Roue selon la revendication 2, caractérisée en ce que la pièce en élastomère forme un support (12 ou 13) sur lequel s'appliquent les faces terminales (31) des talons du bandage.

5. Roue selon la revendication 4, caractérisée en ce que la pièce de support (13) en élastomère comporte un rebord extérieur (14) sur toute sa périphérie, ainsi qu'une partie évidée (15) au voisinage dudit rebord, la largeur de l'évidement (15) correspondant sensiblement exactement à l'épaisseur du talon (2,3) correspondant du bandage (1), lequel évidement (15) est destiné à constituer un logement propre à recevoir l'extrémité (31) du talon correspondant du bandage.

6. Roue selon l'une quelconque des revendications 2 à 5, caractérisée en ce que la pièce en élastomère est rendue solidaire des talons par collage.

7. Roue selon la revendication 1, caractérisée en ce que les moyens de maintien des talons du bandage en position normalement espacée l'un de l'autre sont constitués par une jante (16), comportant un rebord extérieur (17) et deux nervures (18,19) prévues à une distance du rebord qui correspond sensiblement à l'épaisseur du talon (2,3) et qui forment avec ledit rebord (17) des logements (20,21) propres à recevoir les talons (2,3) du bandage (1).

8. Roue selon la revendication 7, caractérisée en ce que la jante présente entre les logements (20,21) une zone horizontale.

9. Roue selon la revendication 8, caractérisée en ce que ladite zone horizontale est située au même niveau que le fond des logements (20,21).

10. Roue selon la revendication 8, caractérisée en ce que ladite zone horizontale est située au sommet des nervures (18,19).

11. Roue selon la revendication 7, caractérisée en ce que lesdits logements (20,21) sont situés au-dessous du plan horizontal théorique de la jante défini par une ligne qui joint les extrémités supérieures des deux nervures (18,19) susdites.

12. Roue selon l'une quelconque des revendications 7, 8 et 11, caractérisée en ce que la partie de la jante (22) délimitée par les extrémités supérieures des deux nervures (18,19) susdites, comprend deux pentes (23,24) de sens opposés dont le sommet commun (25) est décalé par rapport à l'axe commun de la jante (16) et du bandage (1).

13. Roue selon la revendication 12, caractérisée en ce que la longueur de l'une des deux pentes (23) est inférieure à l'épaisseur du talon (2,3) et, par suite, à la largeur du logement (20, 21) délimité par le rebord (17) de la jante (16) et la nervure (18,19) adjacente.

14. Roue selon l'une quelconque des revendications 1 à 13, caractérisée en ce que le bandage comprend des épaulements extérieurs (28) sensiblement dans le prolongement de la bande de roulement (26) du bandage (1).

0251922

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | FR-A- 853 983 (H. PEQUIGNOT)<br>* Page 1, ligne 38 - page 2, ligne 65 * | 1,8,9 | B 60 C 7/12<br>B 60 C 7/24 |
| | --- | | |
| X | FR-A-2 158 268 (J. SOUCEK)<br>* Page 6, revendications 1,9 * | 1,2,3 | |
| | --- | | |
| A | FR-E- 50 591 (H. PEQUIGNOT) | | |
| | --- | | |
| A | US-A-1 534 529 (E. KILLEN) | | |
| | --- | | |
| A | GB-A- 240 311 (F. RUSSELL) | | |
| | --- | | DOMAINES TECHNIQUES RECHERCHES (Int. Cl.4) |
| A | FR-A-1 325 441 (BAYER) | | B 60 C |
| | --- | | |
| A | US-A-4 327 793 (R. WYMAN) | | |
| | --- | | |
| A | FR-A-2 176 622 (G. RUGET) | | |
| | --- | | |
| A,D | FR-A-2 562 842 (PETITJEAN) | | |
| | ----- | | |

Le présent rapport de recherche a été établi pour toutes les revendications

| Lieu de la recherche | Date d'achèvement de la recherche | Examinateur |
|---|---|---|
| LA HAYE | 02-10-1987 | SCHMITT L.P. |